# NEW EUROPEAN PATENT SPECIFICATION

(11) **EP 0 923 187 B2**
(45) Date of publication and mention of the opposition decision: **15.08.2012**
(45) Mention of the grant of the patent: 06.02.2002
(21) Application number: 98123192.1
(22) Date of filing: 04.12.1998
(51) Int. Cl.: H02K 3/12, H02K 15/00

(54) **Alternator for a vehicle**
Wechselstromgenerator für Kraftfahrzeuge
Alternateur de véhicule automobile

(30) Priority: 10.12.1997 JP 36206397; 21.04.1998 JP 12834198; 07.05.1998 JP 12477698; 25.05.1998 JP 14300998
(43) Date of publication of application: 16.06.1999
(73) Proprietor: DENSO CORPORATION, Kariya-city, Aichi-pref. 448-8661 (JP)
(72) Inventor: Kusase, Shin, Kariya-city, Aichi-pref., 448-8661 (JP); Umeda, Atsushi, Kariya-city, Aichi-pref., 448-8661 (JP); Shiga, Tsutomu, Kariya-city, Aichi-pref., 448-8661 (JP)
(74) Representative: Kuhnen & Wacker

(56) References cited:
- EP-A1- 0 454 039
- EP-A2- 0 730 335
- WO-A-92/06527
- WO-A1-92//06527
- DE-A1- 3 441 825
- DE-A1- 4 343 025
- DE-B- 1 180 045
- FR-A- 1 140 338
- FR-A1- 2 594 271
- JP- - 5 7-3 540
- JP- - 9- 215 280
- JP- - 63- 274 335
- JP-A- 3 235 644
- SU-A1- 1 377 964
- US-A- 1 332 154
- US-A- 1 556 891
- US-A- 1 822 261
- US-A- 1 826 295
- US-A- 2 407 935
- US-A- 2 928 963
- US-A- 4 418 295
- US-A- 4 419 597
- US-A- 5 097 167
- US-A- 5 210 928
- 'Système de génération éléctrique' VALEO June 1990 - June 1990,
- VALEO TEAM: ' V40 ESA Alterateur' BROCHURE TECHNIQUE VALEO TEAM GARAGE July 1993 - July 1993,
- ROBERT BOSCH GMBH BOSCH NOTICE TECHNIQUE GÉNÉRATRICES vol. 1, 01 November 1972 - 01 November 1972, ALLEMAGNE,
- DIAGNOSTIC DES PANNES: 'Circuit de charge', 1995, E.T.A.I, PARIS, ISBN 2-7268-8160-2 article G. DUMAZEAU, D. RODES: 'tests, contrÔles, Diagnostic localisation de la panne'
- ROBERT BOSCH GMBH BOSCH NOTICE TECHNIQUE- DÉMARREURS ÉLECTRIQUE vol. 1, 01 October 1972 - 01 October 1972, ALLEMAGNE, page Q
- BOSCH: 'Automotive electric/electronic Systems', vol. 2, June 1994, ROBERT BOSCH GMBH, STUTTGART, ISBN 1-56091-596-X
- ROBERT BOSCH GMBH TEILE FÜR STARTER UND GENERATOREN 1994 - 1994, ALLEMAGNE,
- BÜRGER, SCHIMANN COMPACT LIQUID COOLED ATERNATOR 20 October 1997 - 22 October 1997, AACHEN,
- BIBLIOTHÈQUE DE L'ENSEIGNEMENT TECHNIQUE: 'Électrotechnique à l'usage des ingénieurs', 1952, DUNOD, PARIS article A. FOUILLÉ, pages 114 - 120
- THÉORIE, FONCTIONNEMENT ET CALCUL DES MACHINES ÉLECTRIQUES- 2: 'Machines synchrones', 1965, DUNOD, PARIS article A. GUILBERT
- M. BLANC LE SOUDAGE TIG 23 November 1972 - 23 November 1972, pages 146 - 150
- M. BLANC LE SOUDAGE TIG DES LAMES DE COLLECTEURS 23 November 1972 - 23 November 1972, pages 176 - 177
- E.T.A.I REVUE TECHNIQUE AUTOMOBILE NR. 572 April 1995 - April 1995, PARIS, pages 73 - 74
- E.T.A.I REVUE TECHNIQUE AUTOMOBILE NR. 579 December 1995 - December 1995, PARIS, pages 58 - 59
- DENSO - HISTORY OF DENSO 1996 - 1996,
- 'Engine Electrical' DENSO 1996 - 1996,
- NIPPONDENSO CO, LTD. 1986 - 1986,

## Description

The present invention relates to a stator of a vehicle alternator.

An alternator disclosed in JP-A-3-235644 has a pair of cooling fans fixed to opposite sides of a rotor. The pair of inner cooling fans take cooling air into frames and discharge the cooling air from windows formed in the circumferential surface of the frames, thereby cooling the stator winding.

U.S.P. 1,822,261 and WO92/06527 disclose a plurality of U-shaped conductor segments welded to form a stator winding. However, sharp edges may be formed on the welded portions. Such edges may cause concentration of mechanical stress and electrochemical stress, thereby resulting in mechanical breakdown or electrochemical corrosion. Moreover, dust or foreign particles introduced with the cooling air may accumulate on the edges if such a stator winding is cooled by such a inner cooling fans. If salt water is introduced by the inner cooling fans, insulation members disposed in the stator may be deteriorated.

A rotor structure of a design of interest is disclosed in JP H 9 215 280.

The present invention is to prevent such mechanical and electrochemical troubles on the connected portion of conductor segments forming a stator winding.

In a stator of an alternator for a vehicle according to a main aspect of the invention, the stator winding is composed of a plurality of conductor segments having end portions extending in the opposite direction to each other and a plurality of ball-shaped connected portion between the conductor segments to form continuously connected coils. Each of the ball-shaped connected portions includes one end of one conductor segment and the other end of another conductor segment.

Preferably, the ball-shaped connected portions are disposed at the same end of said stator core. Each of the conductor segments can have a U-shaped portion.

The conductor segments is preferably welded by a non-contact type welder, such as a tungsten inert gas (TIG) welder, to form the connected portions into a ball shape.

The objects, features and characteristics of the present invention as well as the functions of related parts of the present invention will become clear from a study of the following detailed description, the appended claims and the drawings. In the drawings:
Fig. 1 is a cross-sectional view illustrating the whole structure of a vehicle alternator having a stator according to an embodiment of the invention;
Fig. 2 is a perspective view of a conductor segment of the stator according to the embodiment;
Fig. 3 is a fragmentary schematic cross-sectional view of the stator according to the embodiment;
Fig. 4 is a fragmentary side view of the stator according to the embodiment;
Fig. 5A is a perspective view illustrating a connected portion before welding of the conductor segments illustrated in Fig. 2, Fig. 5B is a perspective view of the connected portion after welding, and Fig. 5C is a schematic cross-sectional view of the connected portion;
Fig. 6 is a perspective view illustrating coil ends of the stator according to the embodiment;
Fig. 7 is a fragmentary cross-sectional view of the stator according to a second embodiment not part of the invention;
Fig. 8 is a fragmentary perspective view of the stator according to the second embodiment;
Fig. 9 is a perspective view of a conductor segment of a stator according to a third embodiment not part of the invention;
Fig. 10 is a fragmentary side view of the stator according to the third embodiment.

### Embodiment of the invention

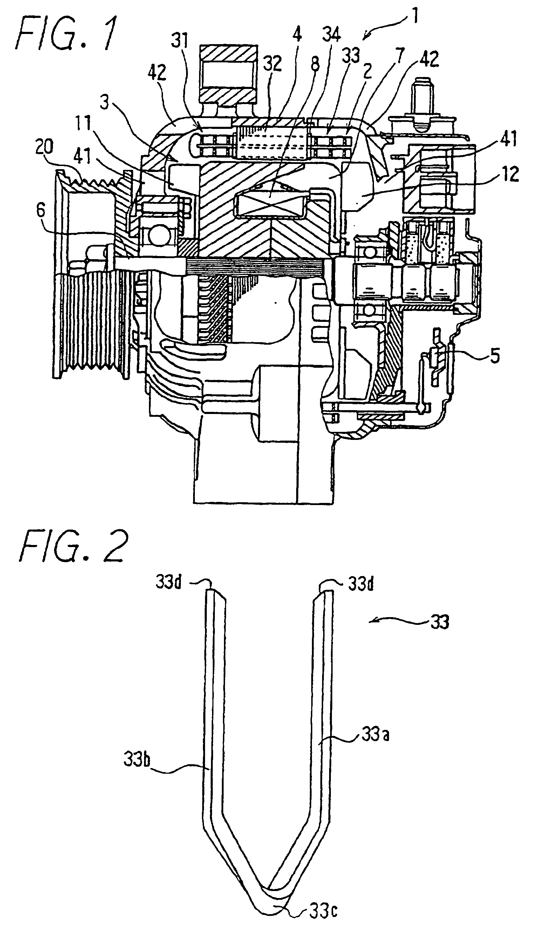

A stator of a vehicle alternator according to a first embodiment of the invention is described with reference to Figs. 1- 6.

In Fig. 1, vehicle alternator 1 is composed of stator 2, rotor 3, a pair of frames 4, rectifier 5 and others.

Stator 2 is composed of stator core 32, a plurality of conductor segments 33 forming a stator winding and insulator 34 disposed between stator core 32 and the conductor segments 33. Stator core 32 is a laminate of cylindrical thin steel sheets which has a plurality of slots in the inner periphery thereof. Conductor segments 33 extend from stator core 32 to form coil ends 31.

Rotor 3 is composed of cylindrically-wound-and-insulated field coil 8, a pair of pole cores 7 respectively having six claw poles which enclose field coil therebetween and shaft 6 press-fitted to the pair of cores 7. Rotor 3 has a mixed flow type cooling fan 11 at the front end thereof to supply cooling air from front portions of the rotor in the axial and radial directions and a centrifugal type cooling fan 12 at the rear end thereof to supply cooling air from rear portions of the rotor in the radial direction.

The pair of frames 4 accommodates and supports stator 2 and rotor 3 so that rotor 3 can rotate about shaft 6 and stator core 2 can be disposed around circumference of rotor 3 at a certain air gap. The pair of frames 4 has air-discharge windows 42 at the portions thereof opposite to coil ends 31 of stator 2 and air-intake windows 41 at the axially opposite surfaces thereof.

Vehicle alternator 1 is driven to rotate by an engine (not shown) via pulley 20 and a belt. When field coil 8 is supplied with exciting current, the claw poles of the pair of pole cores 7 are excited to generate three-phase ac voltage in the stator winding, and dc power is supplied from output terminals of rectifier 5.

As shown in Fig. 2, each of U-shaped copper conductor segments 33 has U-turn portion 33c, inner-portion 33a to be disposed in one of slots 35 at a circumference inside U-turn portion 33c and outer-portion 33b to be disposed in another of slots 35 at a circumference outside U-turn portion 33c. Each of inner-portion 33a and outer-portion 33b has a straight portion to be disposed in one of slots 35 and a portion to extend outward from the one of slots 35.

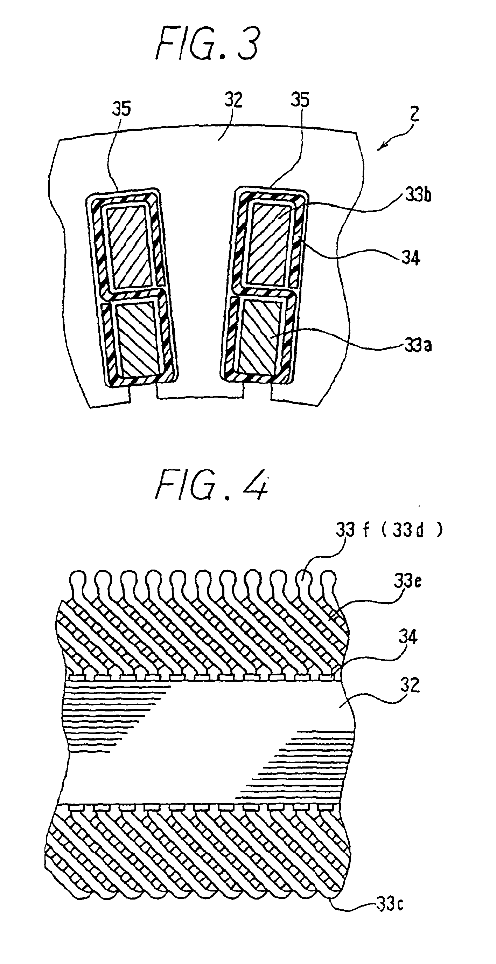

When the stator winding is formed, two conductor segments 33 are inserted in every one of slots 35 and each end portion 33d is connected with different end portion 33d extending from different one of slots 35. As shown in Fig. 3, both inner-portion 33a and outer-portion 33b have a rectangular cross-section with the radial sides being longer than the circumferential sides. Because conductor segments 33 are not coated with insulating material, S-shaped insulator 34 is disposed in each of slots 35 to insulate two conductor segments from each other.

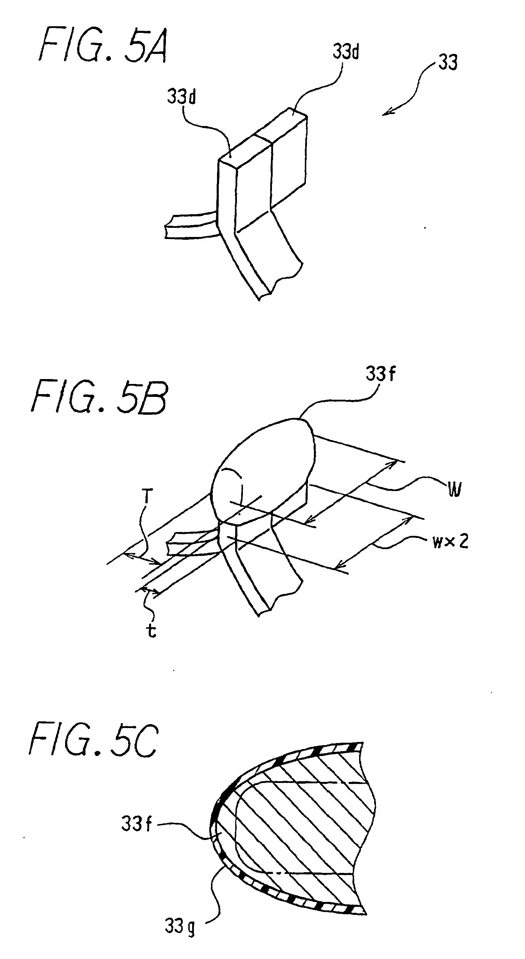

As shown in Fig. 4, U-turn portions 33c are disposed at the same end of stator core 32. Inclined portions 33e extending left are formed from outer-portion 33b, and inclined portions 33e extending right are formed from inner-portion 33a to form uniform coil ends 31. Each of connected portions 33f is formed to join another as shown in Fig. 5A.

Joining end portions 33d are welded together by a contactless type welder such as a tungsten inert-gas welder (hereinafter referred to as the TIG welder) so that only limited area of end portions can be melted to form ball-shaped or raindrop-shaped connected portions 33f. The TIG welder discharges arc current between a tungsten electrode and a base metal member in an inert gas to melt the base metal member and a filler metal member for welding. The TIG welder can control quantity of heat and quantity of filler material separately.

End portions 33d of neighboring conductor segments 33 are put side by side, and a nozzle having a tungsten electrode is brought near the end portions 33d to be welded by the TIG welder.

Because conductor segments 33 made of copper is highly heat conductive, each of connected portions 33f is melted wide enough to form into a raindrop-shaped ball without any edge due to surface tension as shown in Fig. 5B. Each of connected portions 33f becomes larger than conductor segment 33 both in thickness (T > t) and in width (W > 2w). Thus, sufficient mechanical strength and electrical connection can be provided at the connected portions 33f. The edge-less ball-shaped portions are free from concentration of stresses and corrosion. The ball-shaped surface of the connected portion 33f is coated evenly with resinous film 33g for protection and insulation as shown in Fig. 5C.

The stator winding is formed as follows. U-shaped conductor segments 33 are inserted into respective slots 35 of stator 2 so that U-turn portions 33c are disposed on the same axial end of stator core 32, so that outer-portions 33b are disposed at the inner portion of slots 35 (or an outer circumference of stator core 32), and inner-portion 33a are disposed in the outlet portion of slots 35 (or an inner circumference of stator core 32) as shown in Fig. 3.

Each of conductor segments 33 is manufactured as follows. A copper plate is bent and press-formed into a U-shape so that opposite sides of outer-portion 33b and inner-portion 33a are inserted in one of slots 35 to be in contact with the parallel side walls of one of slots 33 via insulator 34.

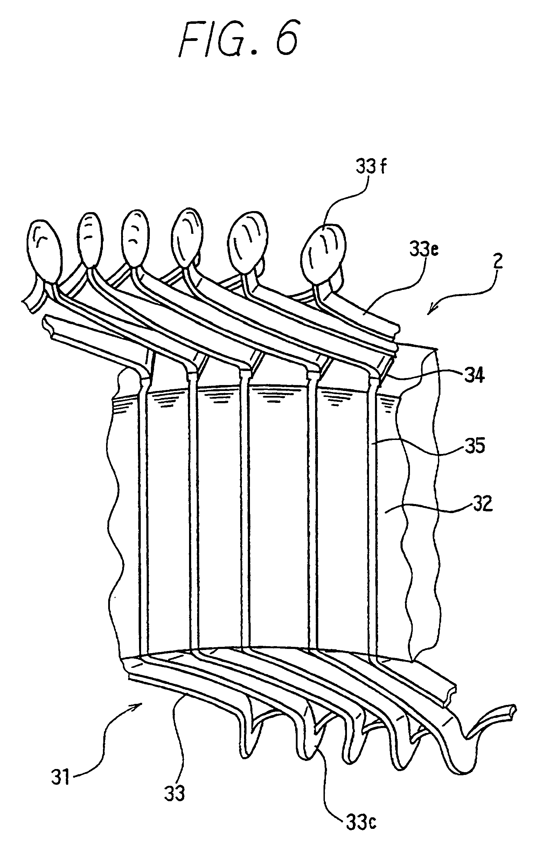

As shown in Fig. 6, each of two end portions 33d of one of conductor segments 33 is bent in the circumferential direction opposite to each other so that outer-portion 33b of the one of conductor segments 33 can be connected to inner-portion 33a of another of conductor segments extending from different one of slots 35 and inner-portion 33a of the former can be connected to outer-portion 33b of another of conductor segments 33 extending from different one of slots 35 at end portions 33d, thereby forming a ring of connected portions 33f, at a certain height from stator core 32. Then, connected portions 33f is dipped in a tank of liquid insulation material, and taken out from the tank to form uniform insulation film on connected portions 33f.

Because all end portions 33d are disposed on the same end of stator core 32, the connection can be carried out by a TIG welder without turning stator core 32. Because all conductor segments 33 are almost the same in shape and connected portions 33f are located at the same height, the dipping process for the insulation of all connected portions 33f can be carried out at the same time. Thus, the insulation process can be made simple, and production cost can be reduced.

### Second Embodiment (not part of the invention)

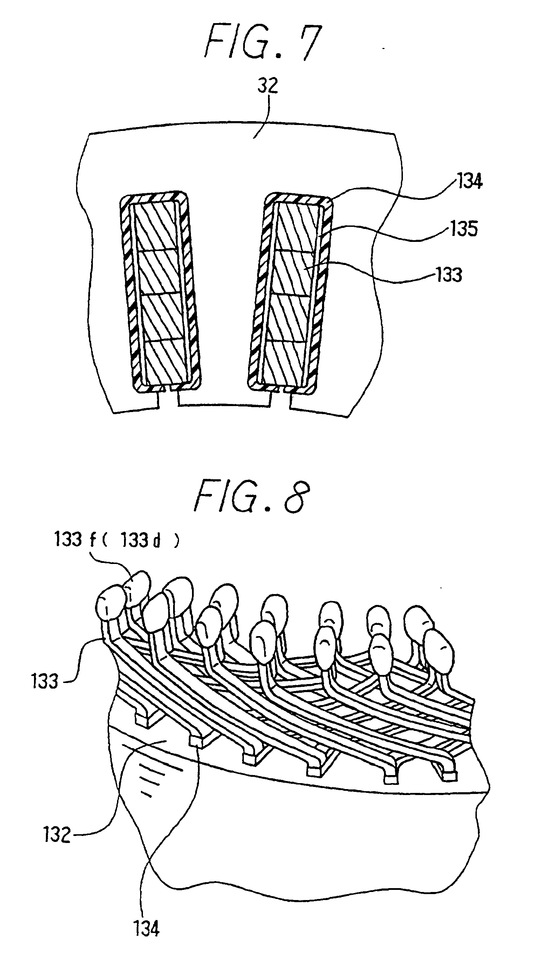

The number of conductor members per slot can be increased to more than two. As shown in Fig. 7, a stator according to a second embodiment of the invention has four conductor segments 133 aligned in the radial direction in one of slot 135. Conductor segments 133 have insulation coating thereon, and a insulator 134 is disposed between conductor segments 133 and inner wall of slot 135. The connected portions are shown in Fig. 8. Four conductor segments 133 in one of slots 135 extends alternately in the opposite circumferential directions. That is, the outermost segments extend clockwise, and the innermost segments extend counter-clockwise in Fig. 8. End portions 133d of conductor segments 133 extending from one of slots 135 are respectively connected to end portions 133d extending from different one of slots 135 spaced apart at a certain pitch therefrom. In other words, the innermost conductor segments 133 are connected respectively to the second inner conductor segments 133, and third inner conductor segments 133 are connected respectively to the outermost conductor segments 133. Accordingly, a plurality of connected portions 133f are formed into two rings so that each of connected portions 133f is spaced apart from another in both radial and circumferential directions. All the connected portions 133f are welded by a TIG welder to have edgeless raindrop shape in the manner substantially the same as the stator according to the first embodiment.

The above structure is effective to provide a smaller-sized vehicle alternator having the same number of slots 35, the distance between the connected portions is closer.

### Third Embodiment (not part of the invention)

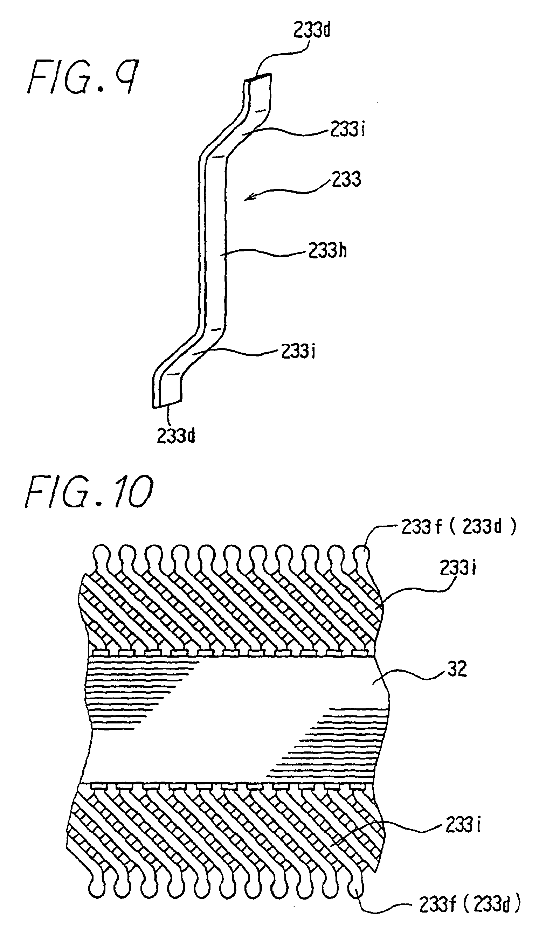

Conductor segments 33 illustrated in Fig. 2 can be separated at the middle of U-turn portion, as shown in Fig. 9. Such conductor segments 233 can be used to a stator according to a third embodiment of the invention. In Fig. 9, conductor segment 233 is composed of straight inner portion 233h and outer portions 233i extending axially outward from opposite ends of inner portion 233h. Outer portions 233i incline at a certain angle to the axial direction so that end portions 233d extending from one of slots can be welded to end portions 233d extending from another slot to form a stator winding. Connected portions 233f are formed at both ends of the stator core and cooled by the pair of cooling fans 11, 12 (Fig. 1). The connected portions 233f are also formed into an edgeless raindrop shape as described before.

It is also possible to provide a single centrifugal cooling fan to cool connected portions 33f instead of a pair of cooling fans. The cooling fan can be axial flow fan also. The ball-shaped connected portions can be applied to an any kind of electric machine having water cooling structure. The cross-section of conductor segments 33 can be circular, elliptic or polygonal. A contactless arc welder other than TIG welder can be applicable to connect end portions 33d of conductor segments 33.

In the foregoing description of the present invention, the invention has been disclosed with reference to specific embodiments thereof. It will, however, be evident that various modifications and changes may be made to the specific embodiments of the present invention without departing from the broader spirit and scope of the invention as set forth in the appended claims. Accordingly, the description of the present invention in this document is to be regarded in an illustrative, rather than restrictive, sense.

## Claims

1. A stator (2) of an alternator (1) for a vehicle, including a stator core (32) having a plurality of slots (35) and stator windings (33) disposed in said plurality of slots (35), wherein said stator windings (33) comprise a plurality of conductor segments (33), having a first and a second end (33d) and a plurality of connected portions (33f) between said conductor segments thereby forming continuously connected coils and each of said connected portions (33f) comprises said first end of said conductor segments (33) and said second end of another of said conductor segments (33),
**characterized in that** each of said conductor segments (33) has rectangular cross section at both ends, said rectangular cross section has radial sides w longer than circumferential sides t, and an end of one of said conductor segments and an end of another of said conductor segments are disposed side by side;
that said connected portions (33f) have the form of a raindrop-shaped edgeless ball;
that each of said connected portions (33f) is larger in both thickness T and width W than any one of said ends (33d) of said conductor segments (33, so that T > t and W > 2w; and
that the surface of the connected portions (33f) is coated evenly with resinous film (33g).

2. The stator (2) as claimed in claim 1, wherein each of said connected portions (33f) has a shape that has radial size longer than circumferential size.

3. The stator (2) as claimed in claim 2, wherein said connected portions (33f) are disposed in a circumferential line.

4. The stator (2) as claimed in claim 1, wherein said ball-shaped connected portions (33f) are disposed at the same end of said stator core (32).

5. The stator as claimed in claim 4, wherein each of said conductor segments (33) has a U-shaped portion (33c).

6. The stator (2) as claimed claim 1, wherein each of said connected portions (33f) is disposed to receive cooling air from the inside of said stator (2).

7. The stator (2) as claimed in claim 1, wherein each of said conductor segments (33) is welded by a non-contact type welder.

8. The stator (2) as claimed in claim 7, wherein said non-contact type welder is a TIG welder.

9. The stator (2) as claimed in claim 1, wherein every two of said conductor segments (33) are disposed in one of said slots (35).

10. The stator (2) as claimed in claim 1, wherein said ball-shaped connected portions (33t) are disposed at the same height from said stator core (32).

## Patentansprüche

1. Stator (2) eines Generators (1) für ein Fahrzeug, mit einem Statorkern (32), der eine Mehrzahl von Nuten (35) sowie in der Mehrzahl von Nuten (35) untergebrachte Statorwicklungen (33) aufweist, wobei die Statorwicklungen (33) eine Mehrzahl von Leitersegmenten (33) mit einem ersten und einem zweiten Ende (33d) und einer Mehrzahl von zusammengeschlossenen Abschnitten (33f) zwischen den Leitersegmenten aufweisen, wodurch kontinuierlich zusammengeschlossene Spulen gebildet sind, und jeder der zusammengeschlossenen Abschnitte (33f) das erste Ende der Leitersegmente (33) und das zweite Ende eines anderen der Leitersegmente (33) aufweist,
**dadurch gekennzeichnet, dass** jedes der Leitersegmente (33) einen rechteckigen Querschnitt an beiden Enden hat, wobei der rechteckige Querschnitt radiale Seiten w länger als Seiten t in Umfangsrichtung aufweist, und ein Ende eines der Leitersegmente und eine Ende eines anderen der Leitersegmente Seite an Seite angeordnet sind;
dass die zusammengeschlossenen Abschnitte (33f) die Form einer tropfenförmigen kantenlosen Kugel aufweisen;
dass jeder der zusammengeschlossenen Abschnitte (33f) sowohl in der Dicke T als auch der Breite W größer ist als eines der Enden (33d) der Leitersegmente (33), so dass T > t und W > 2w; und
dass die Oberfläche der zusammengeschlossenen Abschnitte (33f) gleichmäßig mit einer Harzschicht (33g) bedeckt ist.

2. Stator (2) nach Anspruch 1, bei welchem jeder der zusammengeschlossenen Abschnitte (33f) eine Form hat, bei der die radiale Abmessung länger als die umfangsmäßige Abmessung ist.

3. Stator nach Anspruch 2, bei welchem die zusammengeschlossenen Abschnitte (33f) auf einer Umfangslinie angeordnet sind.

4. Stator (2) nach Anspruch 1, bei welchem die kugeligen zusammengeschlossenen Abschnitte (33f) an dem selben Ende des Statorkerns (32) angeordnet sind

5. Stator (2) nach Anspruch 4, bei welchem jedes der Leitersegmente (33) einen U-förmigen Abschnitt (33c) aufweist.

6. Stator (2) nach Anspruch 1, bei welchem jeder der zusammengeschlossenen Abschnitte (33f) so angeordnet ist, dass er Kühlluft von der Innenseite des Stators (2) her erhält.

7. Stator (2) nach Anspruch 1, bei welchem jedes der Leitersegmente (33) durch eine berührungsfrei arbeitende Schweißeinrichtung verschweißt ist.

8. Stator (2) nach Anspruch 7, bei welchem die berührungsfrei arbeitende Schweißeinrichtung eine TIG-Schweißeinrichtung ist.

9. Stator (2) nach Anspruch 1, bei welchem jeweils zwei der genannten Leitersegmente (33) in einer der Nuten (35) untergebracht sind.

10. Stator (2) nach Anspruch 1, bei welchem die kugeligen zusammengeschlossenen Abschnitte (33f) von dem Statorkern (32) aus auf gleicher Höhe angeordnet sind.

## Revendications

1. Stator (2) d'un alternateur (1) pour un véhicule, comportant un noyau de stator (32) avec une pluralité de fentes (35) et des enroulement de stator (33) disposés dans ladite pluralité de fentes (35), où lesdits enroulements de stator (33) comprennent une pluralité de segments conducteurs (33), ayant une première et une deuxième extrémité (33d) et une pluralité de parties connectées (33f) entre lesdits segments conducteurs formant ainsi des bobines connectées en permanence et chacune desdites parties connectées (33f) comprend ladite première extrémité desdits segments conducteurs (33) et ladite deuxième extrémité d'un autre desdits segments conducteurs (33),
**caractérisé en ce que** chacun desdits segments conducteurs (33) présente une coupe transversale rectangulaire au niveau des deux extrémités, ladite coupe transversale rectangulaire possède des côtés radiaux w plus longs que des côtés circonférentiels t, et une extrémité de l'un desdits segments conducteurs et une extrémité d'un autre desdits segments conducteurs sont disposées côte à côte ;
**en ce que** lesdites parties connectées (33f) ont la forme d'une sphère sans bord en forme de goutte d'eau ;
**en ce que** chacune desdites parties connectées (33f) est plus grande à la fois dans l'épaisseur T et la largeur W que l'une quelconque desdites extrémités (33d) desdits segments conducteurs (33), de sorte que T > t et W > 2w ; et
**en ce que** la surface des parties connectées (33f) est revêtue uniformément avec un film résineux (33g).

2. Stator (2) tel que revendiqué dans la revendication 1, dans lequel chacune desdites parties connectées (33f) a une forme avec une taille radiale plus longue que la taille circonférentielle.

3. Stator (2) tel que revendiqué dans la revendication 2, dans lequel lesdites parties connectées (33f) sont disposées dans une ligne circonférentielle.

4. Stator (2) tel que revendiqué dans la revendication 1, dans lequel lesdites parties connectées (33f) en forme de sphère sont disposées au niveau de la même extrémité dudit noyau de stator (32).

5. Stator tel que revendiqué dans la revendication 4, dans lequel chacun desdits segments conducteurs (33) a une partie en forme de U (33c).

6. Stator (2) tel que revendiqué dans la revendication 1, dans lequel chacune desdites parties connectées (33f) est disposée pour recevoir de l'air de refroidissement de l'intérieur dudit stator (2).

7. Stator (2) tel que revendiqué dans la revendication 1, dans lequel chacun desdits segments conducteurs (33) est soudé par une soudeuse du type sans contact.

8. Stator (2) tel que revendiqué dans la revendication 7, dans lequel ladite soudeuse de type sans contact est une soudeuse TIG.

9. Stator (2) tel que revendiqué dans la revendication 1, dans lequel tous les deux segments desdites segments conducteurs (33) sont disposés dans l'une desdites fentes (35).

10. Stator (2) tel que revendiqué dans la revendication 1, dans lequel lesdites parties connectées (33f) en forme de sphère sont disposées à la même hauteur dudit noyau de stator (32).
